# EUROPEAN PATENT APPLICATION

(11) **EP 0 571 334 A1**
(43) Date of publication of application: **24.11.1993**
(21) Application number: 93830095.1
(22) Date of filing: 10.03.1993
(51) Int. Cl.: B29C 45/13, B29C 45/54

(54) **Apparatus for continuously injecting elastomeric and plastic materials**

(30) Priority: 17.03.1992 IT MI920619; 17.03.1992 IT MI920620
(71) Applicant: Delia, Giovanni, I-20094 Corsico (Milano) (IT)
(72) Inventor: Delia, Giovanni, I-20094 Corsico (Milano) (IT)
(74) Representative: Cicogna, Franco

(57) **Abstract**

An apparatus for continuously injecting elastomeric and plastic materials comprising two injection assemblies, which can be selectively actuated and alternately arranged in communication with an injection nozzle (23) through a valve (15) designed for communicating selectively and alternatively with the injection nozzle (23) only one of the injection chambers (8,9).

## Description

### BACKGROUND OF THE INVENTION

The present invention relates to an apparatus for continuously injecting elastomeric and plastic materials.

There are already known and commercially available apparatus for injecting elastomeric and plastic materials, which apparatus conventionally comprise a die, usually including conveying screws for conveying the material to be injected and to two injection chambers and for ejecting said material through nozzles communicating with the injection chambers.

These prior apparatus have the drawback of comparatively great dead times, between an injection step and a subsequent injection step, which is very disadvantageous as great amounts of materials must be injected, which requires a lot of injection operations.

Thus, with prior apparatus, the injection of the material can not be performed in a continuous manner, but by several injection steps and additional steps in which no injection is performed, and, on the contrary, are performed operations for introducing into the injection chamber the material to be successively injected.

Thus, in addition to the above mentioned time loss, there is moreover a great difficulty for performing, in a proper succession, several injection steps, such as, for example, inside a same mold.

### SUMMARY OF THE INVENTION

Accordingly, the main object of the present invention is to overcome the above mentioned drawbacks, by providing an apparatus for injecting elastomeric and plastic materials, which affords the possibility of continuously injecting the elastomeric or plastic material through an injecting nozzle.

Another object of the present invention is to provide such an apparatus which allows to inject perfectly metered amounts of elastomeric and plastic materials, and which, moreover, is very reliable and safe in operation and can be made starting from easily commercially available elements and materials, at a comparatively low making cost.

According to one aspect of the present invention, the above mentioned objects, as well as yet other objects, which will become more apparent hereinafter, are achieved by an apparatus for continuously injecting elastomeric and plastic materials, characterized in that said apparatus comprises two injection assemblies, which can be selectively actuated and alternatively arranged in communication with an injection nozzle, trhough a valve designed for selectively and alternatively communicating with said nozzle only one of the injection chambers.

### BRIEF DESCRIPTION OF THE DRAWINGS

Further characteristics and advantages of the invention will become more apparent hereinafter, from the following disclosure of two preferred, though not exclusive,embodiments of an apparatus for continuously injecting elastomeric and plastic materials, which is illustrated, by way of an indicative, but not limitative example, in the figures of the accompanying drawings, where:
Figure 1 shows an apparatus including a punching-screw pump, cross sectioned through the laying plane of the dies;
Figure 2 is a cross sectional view of the apparatus substantially taken along the line II-II of Figure 1;
Figure 3 is another cross-sectional view of the subject apparatus substantially taken along the line III-III of Figure 2; and
Figure 4 illustrates an apparatus with a die or drawing-extruding device for supplying the elastomleric or plastic materials to be injected to two injection chambers.

### DESCRIPTION OF THE PREFERRED EMBODIMENTS

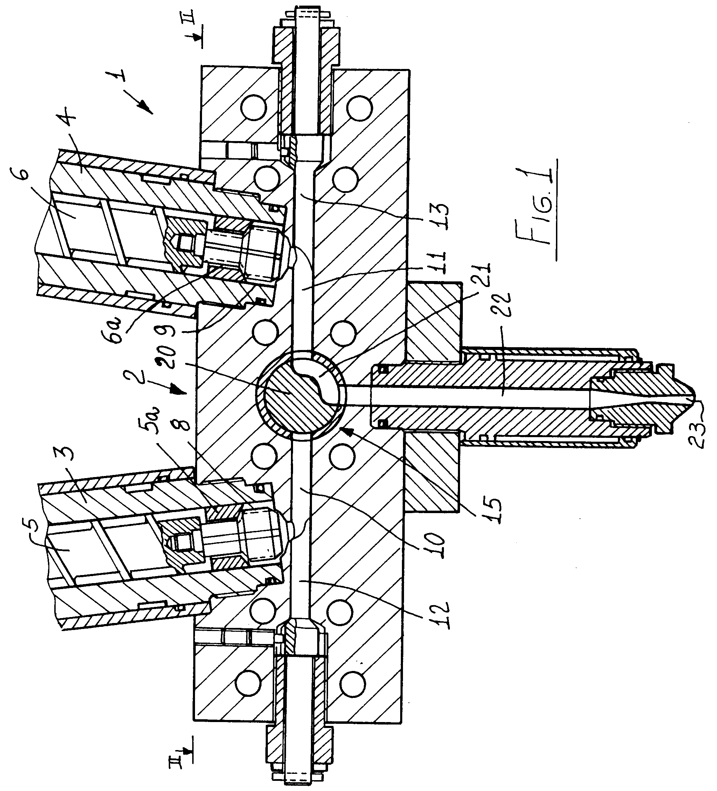

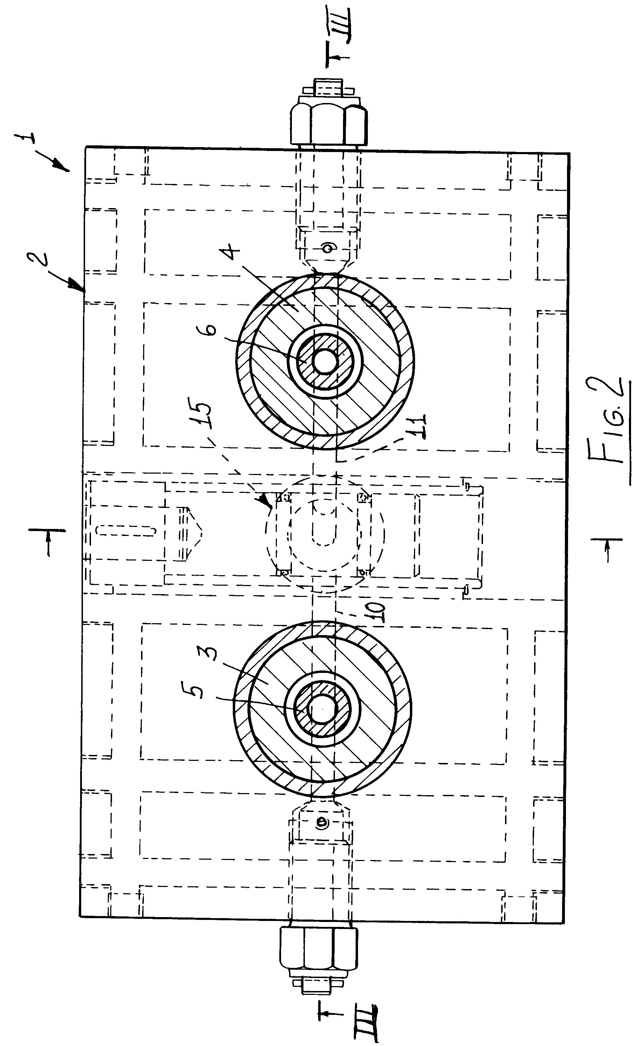

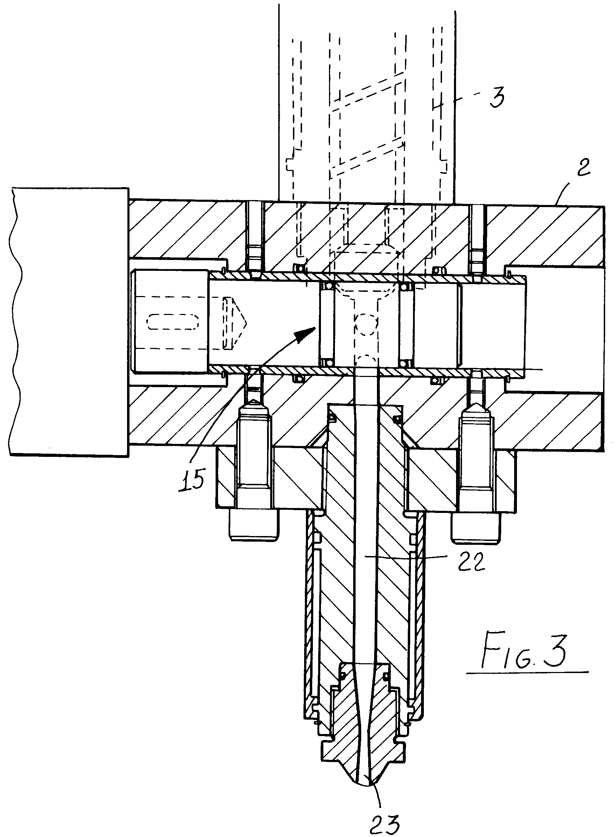

With reference to the number references of Figures 1, 2 and 3, which illustrate an apparatus of the punching screw type, for injecting elastomeric and plastic materials, according to the present invention, said apparatus comprises a pump, indicated at the reference number 1, which includes a connecting block therewith there are associated first die or drawing-extruding devices 3 and 4, in which there are arranged the punching screws 5 and 6, cooperating with a floating piston, respectively indicated at 5a and 6a, arranged at a respective injection chamber, said injection chambers being indicated at the reference number 8 and 9.

To each injection chamber there is connected an injection channel, 10 and 11, said injection channels converging to a valve generally indicated at the reference number 15.

In the channels 10 and 11 there are arranged rod elements 12 and 13 for directing the material flow towards the valve 15, in which a rotary switching element 20, or selecting element, provided with a communication channel 21, allows the channel 10, or the channel 11, to be selectively communicated with an inlet channel 12 which leads to an injection nozzle 13.

On the dies 3 and 4 can be provided mechanic limit means for suitably limiting the loading stroke or travel of the die or extruder.

With the disclosed arrangement, during the loading step of the injection chamber 8, the injection chamber 9 is emptied, by the punching operation of the screw 6, which will supply the material, through the valve 15 turned to the position shown in Figure 1, toward the nozzle 23.

At the end of the injection step, performed by the die or extruder 4, the valve is reversed, and, while the chamber 9 is loaded, the injection chamber 8 is emptied, so that it is possible to perform an alternate injection of the material, thereby providing a continuous material supply to the nozzle.

The material is injected in a set metered amount, by detecting the injection amount by means of electric or electronic means adapted to sense the travel of the operating screw.

Moreover, to improve the metering accuracy, which is controlled by conventional electric systems and locking hydraulic systems, it is possible to provide a mechanical system for locking the travel of the punching screws, by arranging a mechanical stop element for stopping the return stroke of the injection screw, by using threaded rotary rods or other means which can be operated either manually or automatically by actuators.

During the loading step of the first injection chamber, it is possible to inject elastomeric or plastic materials into the other injection chamber, through the valve 15, which will be correspondingly actuated.

This alternating operation can be successively repeated, thereby providing the possibility of injecting any volumes of materials, depending on requirements.

It is also possible to double the operating yield, by using a twin-body pump, that is by practically providing, on a single block, two discrete pairs of dies or extruders, which can be operated according to a cyclic succession, so as to continuously supply elastomeric or plastic materials to the nozzle.

Moreover, the above disclosed pump can also be applied to plates including temperature adjusted channels, so as to allow the material to be injected at several regions of a plane, with limited volumes which moreover will be independent for each injection nozzle.

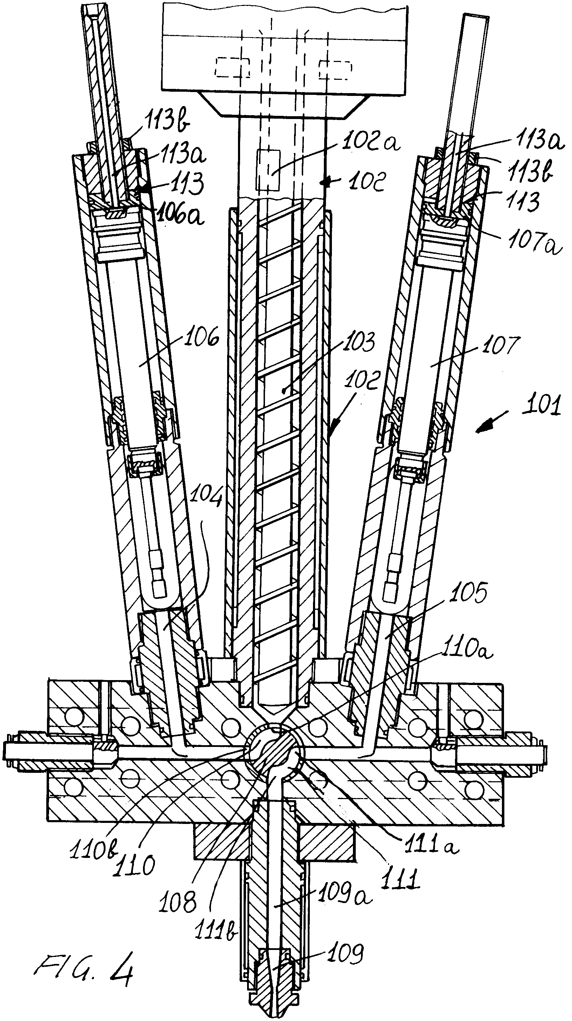

With reference to the number references of Figure 4, the apparatus herein indicated at 101, comprises a temperature adjusted or controlled die or extruder 102, which supplies two injection chambers, and is held at a set temperature, under the control of a known type of heating and cooling device.

To the die 102, which is loaded through an inlet 102a with materials to be processed cut in strips, granules or the like, is connected a so-called plasticization screw 103, provided for processing the material, which, under the effect of the heat of the die and of friction due to the movement of the plasticizing screw 103, will be brought to a paste condition.

The apparatus 101 comprises at least a pair of injection chambers 104 and 105 which, at one end thereof, are connected to the temperature-adjusted die 104 and, at the other end portions thereof, being connected to a corresponding injection piston or plunger 106 and 107.

In the embodiment being disclosed, to the die 102 there is connected a valve including a reversing assembly 108, arranged between the die and injection chambers 104 and 105.

The reversing assembly 108, as shown, is connected to a nozzle holder duct 109a, holding an injection nozzle 109, adapted to inject, under a high pressure, said material into a mould or extruding die.

More specifically, the reversing assembly 108 coprises at least a pair of ducts 110 and 111 each of which is provided with a first inlet 110a and 111a provided for engaging, alternatively, with the outlet of the material processed by the extruder or die 102, and with the injection chamber 104 and 105 and a second outlet 110b and 111b provided for alternatively engaging with the injection chamber 104 and 105 and the nozzle holder duct 109a of the nozzle 109.

In operation, the material to be injected is conveyed to the injection chamber 104 by means of the screw 103, as far as a set material amount is reached, the metered material being controlled by means for detecting the operating stroke of the injection piston 106.

These detecting means can be either of an electric or of an electronic type and, anyhow, are conventionally known to one skilled in the art.

There are moreover provided locking means 113, preferably of a mechanic type, for mechanically locking the loading stroke of the piston 106.

In an analogous manner, the injection chamber 105 will be loaded and controlled by detecting means and locking means 113, associated with the piston 107.

Moreover, each piston 106 and 107 is provided with a movable bottom portion 106a and 107a which is controlled by the mechanical locking means 113, comprising an end of stroke threaded bar 113a which is connected to the movable bottom portion 106a and 107a, and a locking ring nut 113b for locking the bar or rod 113a.

According to the present invention, there are herein provided two injection chambers, with a reversing assembly, but, as it should be apparent, it will be possible to also provide four chambers, with two reversing assemblies.

The operation of the apparatus which has been disclosed from its construction standpoint can be resumed as follows.

The material to be processed is introduced, through the introducing inlet, into the temperature adjusted extruder or die and, by means of the plasticizing screw, it is brought to a paste condition ready for the injection.

By means of the above mentioned plasticizing screw, the material is pushed, through the first inlet therefor, to one of the two ducts of the reversing assembly and hence to an injection chamber, in a preset amount, which is controlled by the above mentioned means of electric or electronic type for detecting the stroke or displacement of the injection piston or plunger.

Moreover, in order to improve the metering accuracy, there are used means for locking the displacement or stroke of the piston, which operate on the bottom portion of each piston, by means of the rotation of the threaded rod and ring-nut for locking the rod.

During the loading step of an injection chamber, the other injection chamber, through the first port of the reversing assembly, injects into the duct the material which is ejected from the second port into the nozzle holder duct, toward the nozzle and hence to the mold.

At the end of the filling step of a chamber and the empting step of the other, the reversing assembly is caused to turn in order to fill in the empty chamber and empty the just filled in chamber.

Thus, the injection chambers are alternatively filled, as they are in communication with the die or extruder, said chambers being alternatively emptied as they inject, through the ejecting nozzle, the material into the mold.

Accordingly, during the period of time in which the material is injected into the mold from a chamber, the plasticizing screw can convey the material to the other chamber, up to achieve herein the set amount.

By repeating the above disclosed operations, it is possible to inject material into a mold, without interruption.

From the above disclosure it should be apparent that the invention fully achieves the intended aim and objects.

In fact, it is possible to perform the injection of the material to be injected in a continuous manner, while using extruders, injection chambers and pistons of small size.

Moreover, it is also possible to improve the metering accuracy of the material, and this by using the above disclosed locking means.

Finally, it has been found that the injection apparatus operates with an improved efficiency, providing a good quality finished product, without any defects due to a difference in cooling or heating of the material.

While the invention has been disclosed and illustrated with reference to preferred embodiments thereof, it should be apparent that the disclosed embodiments are susceptible to several modifications and variations all of which will come within the spirit and scope of the appended claims.

## Claims

1. An apparatus for continuously injecting elastomeric and plastic materials, characterized in that said apparatus comprises two injection assemblies which can be selectively actuated and alternatively communicated with an injection nozzle, through a valve for selectively and alternatively communicating said nozzle with only one of the injection chambers.

2. An apparatus according to Claim 1, characterized in that said apparatus comprises, in said injection chambers, at least a pair of extruders with punching screws, provided with punching elements, operating in respective injection chambers, in communication with said valve in order to cause said injection chambers to be selectively communicated with said nozzle, so as to provide a substantially continuous output flow of material.

3. An apparatus according to Claim 1, characterized in that said valve includes a communication channel which can be selectively communicated with an inlet chamber and with an injection nozzle.

4. An apparatus according to Claim 1, characterized in that said apparatus further comprises mechanic means for locking the loading stroke of said extruder, a mechanic stop element being provided for stopping the return stroke of the plasticizing screw, through the rotation of threaded rods which can be either manually or automatically operated by means of actuators.

5. An apparatus according to Claim 1, characterized in that said apparatus further comprises a double body, with two pairs of extruders, arranged on a connecting block including said valve.

6. An apparatus according to Claim 1, characterized in that said apparatus further comprises an extruder for selectively supplying material to two injection chambers, and that said valve comprises a first duct for connecting said extruder and one of said chambers and a second duct for connecting the other injection chamber to the outlet nozzle.

7. An apparatus according to Claim 6, characterized in that in said injection chamber there is provided an injection piston for ejecting the material from said injection chamber toward the outlet nozzle.

8. An apparatus according to Claim 1, characterized in that said apparatus further comprises mechanic locking means for locking the stroke of the piston in the injection chambers, said mechanic locking means comprising a limit threaded rod connected to a movable bottom element and a ring nut for locking said rod.

9. An apparatus according to Claim 1, characterized in that said apparatus further comprises temperature adjustable plates arranged at an injection region of said apparatus.
